# EUROPEAN PATENT APPLICATION

(11) **EP 0 530 915 A1**
(43) Date of publication of application: **10.03.1993**
(21) Application number: 92202645.5
(22) Date of filing: 01.09.1992
(51) Int. Cl.: H04B 10/20, G02B 6/28

(54) **Telecommunication network comprising a single glass fibre cable**

(30) Priority: 02.09.1991 EP 91202216
(71) Applicant: Philips Electronics N.V., 5621 BA Eindhoven (NL)
(72) Inventor: Khoe, Giok Djan, NL-5656 AA Eindhoven (NL); Kluitmans, Johannes Theresia Marinus, NL-5656 AA Eindhoven (NL); Angenent, Johannes Hendrikus, NL-5656 AA Eindhoven (NL)
(74) Representative: De Jongh, Cornelis Dominicus

(57) **Abstract**

A telecommunication network which is simple to install comprises not more than a single glass fibre cable (6) which is led past a plurality of network terminals. These network terminals comprise a branch element (10,12) for branching part of the light transported through the glass fibre. In order not to have to modify the network in the case of future extensions, a glass fibre cable is used on installation, which cable comprises a multimode glass fibre ribbon as well as a single mode glass fibre ribbon.

## Description

The invention relates to a telecommunication network comprising a glass fibre cable coupled to a distribution unit, this cable comprising at least a branch element which includes an output element for coupling out a fraction of the light transported through the glass fibre cable, the output element being coupled to an output of the branch element, the output of the branch element being coupled to a network terminal.

The invention likewise relates to a branch element and a glass fibre cable suitable for use in such a telecommunication network.

A telecommunication network as stated in the opening paragraph is known from European Patent Specification 0 193 190 B1.

For making communication through glass fibres possible between a distribution unit and a plurality of network terminals, different types of networks are used. A widely known example thereof is a star network.

In a star network a separate glass fibre cable is necessary for each network terminal between that network terminal and the distribution unit. Because for each network terminal a glass fibre is to be split from a bundle of glass fibres, the arrangement of such a network is labour intensive.

In the telecommunication network known from above Patent Specification only a single glass fibre cable is used which is led past all the network terminals. At each network terminal a branch element is installed which comprises an output element which couples out part of the light transported through the glass fibre. As a result, the additional costs which have to be made for splitting a glass fibre from a bundle of glass fibres at each network terminal are avoided.

A disadvantage of the known network, however, is that it is less suitable for extensions and adaptations in the future, because the glass fibre cable is used in common by all the network terminals. For example, if the network is to be made suitable for transferring more than one signal from the distribution unit to several network terminals by means of wavelength multiplexing, optical filters are to be installed in all the network branch elements. For example, in a star network the adaptation may be effected in a much more simple manner because a separate glass fibre is available to each network terminal and distribution unit, so that filters need only to be installed for the appropriate network terminals.

It is a object of the invention to provide a telecommunication network as stated in the opening paragraph which is better suitable for extensions and adaptations in the future.

For this purpose, the telecommunication network is characterized, in that the glass fibre cable comprises more than one glass fibre, in that the branch element comprises a plurality of output elements for coupling out fractions of the light transported through different glass fibres, in that the output elements are coupled to outputs of the branch element and in that the outputs of the branch element are coupled to the network terminal.

By equipping the glass fibre cable with more than one glass fibre and the branch elements with further output elements, the possibility is created that an adaptation for not more than a few network terminals may be effected by utilizing a different glass fibre for this adaptation.

For example, if one wishes to send more than one signal to several network terminals, this may be effected *via* different glass fibres instead of the implementation of wavelength multiplexing.

It should be observed that glass fibre cables comprising more than one fibre are known *per se* from German Patent Specification DE 31 04 404 A1. However, the cable disclosed in that Patent Specification is not led with all its glass fibres past all the network terminals where part of the light transported through one or more of these glass fibres is coupled out.

An embodiment of the invention is characterized, in that the glass fibre cable comprises at least two types of glass fibres.

By arranging two types of glass fibres in the glass fibre cable, it is possible to utilize the network for applications which require different types of glass fibres.

An embodiment of the invention is characterized, in that the glass fibre cable comprises at least a multimode and a single mode fibre.

By incorporating both single mode and multimode glass fibres in the glass fibre cable, it is possible to extend in a simple manner a network which utilizes multimode glass fibres, for example, for communication at a relatively low rate to a network which utilizes single mode glass fibres, for example, for communication at a very high rate, without the inherent need for drastic changes in the network.

A further embodiment of the invention is characterized, in that the glass fibre cable comprises a glass fibre ribbon.

If the glass fibre cable is arranged in the form of a ribbon, this cable may easily be connected to planar branch elements. Branch elements arranged in planar technology are advantageous in that they can be relatively easily manufactured in large amounts with the aid of techniques which are comparable to those used for the manufacture of integrated circuits.

A further embodiment of the invention provides a planar branch element, characterized in that the branch element comprises a substrate which on one side has a first series of recesses intersecting a second series of recesses, in that the output elements comprise light scattering elements at the intersections of a recess from the first series of recesses and an associated recess from the second series of recesses, each recess from the second series of recesses accommodating a maximum of one output element.

For mounting the output element to the glass fibre cable, the glass fibre cable is cut through and either end of the glass fibre cable is accommodated in the first series of recesses on either side of the branch element. Part of the light passing the branch element through the recesses is coupled out by the light scattering element. This light is discharged by a ribbon-like glass fibre cable accommodated in the second series of recesses.

The invention will now be further explained with reference to the drawing Figures, in which like elements are denoted by like reference numerals, in which:
Fig. 1 shows an example of a telecommunication network according to the invention;
Fig. 2 shows a glass fibre cable suitable for use in a telecommunication network as shown in Fig. 1;
Fig. 3 shows an allocation of various signals to the various glass fibres and the glass fibre cable as shown in Fig. 2;
Fig. 4 shows a branch element suitable for use in a telecommunication network as shown in Fig. 1;
Fig. 5 shows a block diagram of a first embodiment of a distribution unit 4 suitable for use in a telecommunication network as shown in Fig. 1; and
Fig. 6 shows a block diagram of a second embodiment of a distribution unit 4 suitable for use in a telecommunication network as shown in Fig. 1.

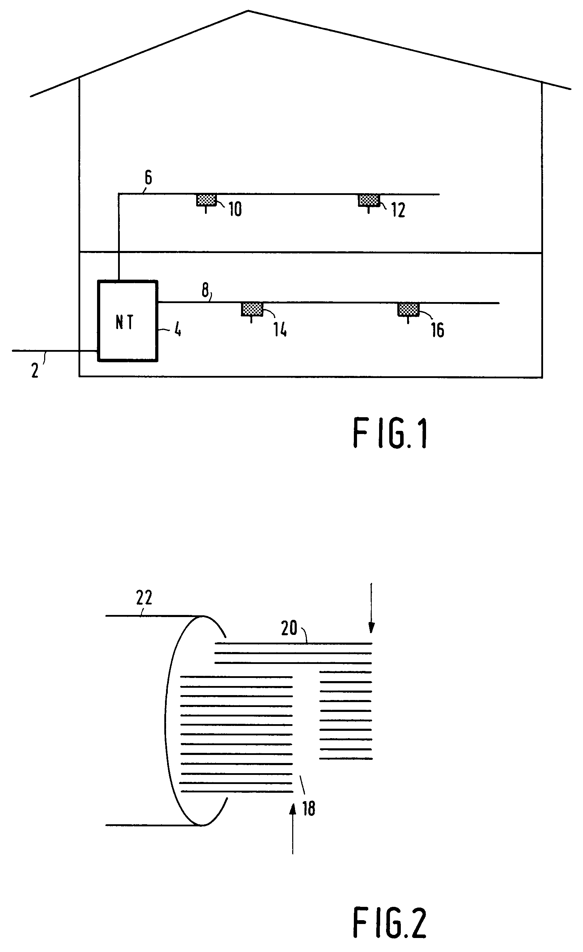

Fig. 1 shows a telecommunication network according to the invention, which is arranged in a house. A glass fibre 2 coming from a telecommunication exchange is applied to a distribution unit 4. From the distribution unit 4 two glass fibre cables according to the invention are installed. A first glass fibre cable 6 is installed on the first floor, whereas a second glass fibre cable 8 is installed on the ground floor. At several locations branch elements (10,12,14,16) are connected to the glass fibre cables (6,8). The signals coming from a branch element may be rendered available by means of an optical connector which in that case forms the network terminal.

In the glass fibre cable as shown in Fig. 2 two glass fibre ribbons 18 and 20 are available. The ribbon 18 comprises multimode glass fibres for transmitting signals which have a relatively small bandwidth, such as audio signals. When the network comes into operation these glass fibres will chiefly be used. For future extensions, such as HDTV, also the single mode fibres will be used.

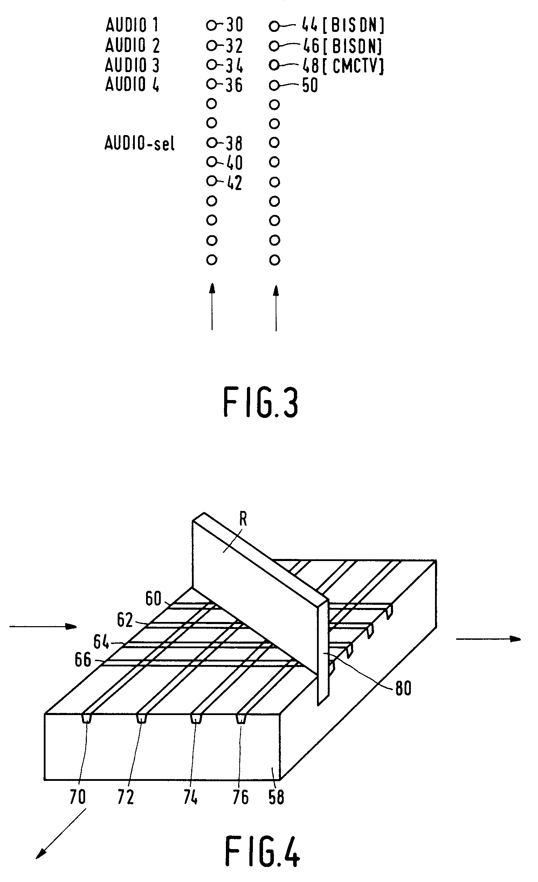

Fig. 4 shows a possible allocation of various signals to glass fibres in the glass fibre cable as shown in Fig. 3. The glass fibres 30,32,34 and 36 are intended for audio signals. An audio receiver may then be connected to each of the glass fibres 30,32,34 and 36. In this example 4 different audio signals may be simultaneously transmitted over the network. Glass fibre 38 is intended for controlling a selection signal to the distribution unit for selecting one of the four audio signals from a much larger supply of audio programs.

The glass fibres 44,46 and 48 are intended for optional network extensions. The single mode glass fibres 44 and 46 are intended for transmitting and receiving respectively, wideband ISDN signals, whereas the glass fibre 48 is intended for transporting signals modulated on different optical carriers that have a relatively small frequency spacing. Such a signal may be used, for example, for distributing HDTV signals.

In the branch element as shown in Fig. 4 the first series of recesses comprises the recesses 60,62,64 and 66. The second series of recesses comprises the recesses 70,72,74 and 76. The light scattering elements are formed by a sub-mirror 88 installed diagonally in the recesses.

Light incident on the sub-mirror 80 *via* the glass fibres installed in the recesses 60,62,64 and 66 is partly reflected by this sub-mirror and ends in the recesses 70,72,74 and 76, which recesses accommodate glass fibres for carrying off these light signals. The part of the light not reflected by the sub-mirror 80 will pass the mirror and end in the recesses on the other side of the sub-mirror 80 where this light can be carried off by means of glass fibres. It is also possible to inject light signals into the glass fibres 60,62,64 and 66 by way of the glass fibres accommodated in the recesses 70,72,74 and 76. This procedure is utilized for transmitting information from the network terminals to the distribution unit.

It will be evident that a construction of the branch element as described hereinbefore is pre-eminently suitable for use with a ribbon-like glass fibre cable, because the parallel glass fibres of that cable may be accommodated in the recesses in a simple manner.

It is conceivable that if no apparatus need yet be connected to the network terminal, a non-reflecting plate *in lieu of* the sub-mirror 80 is inserted in the branch element, so that no signal power is lost in the branch element. When a set is connected to the relevant network terminal at a later stage, a sub-mirror may as yet be substituted for the non-reflecting plate.

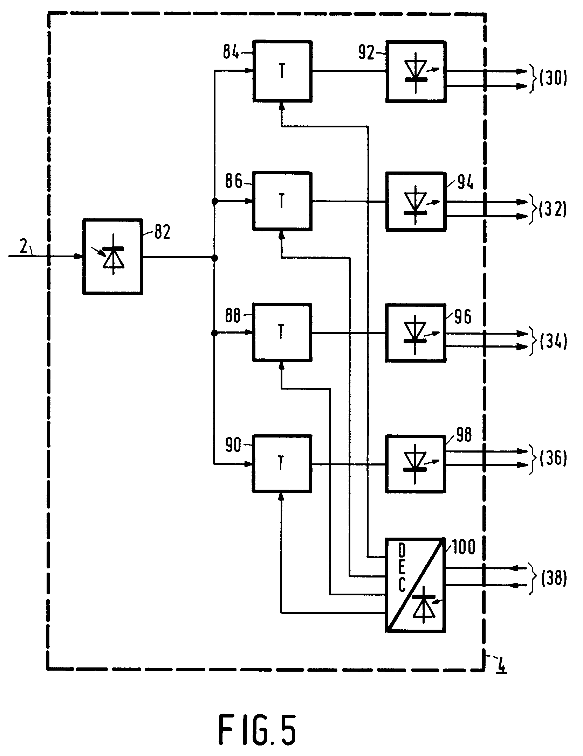

In the distribution unit as shown in Fig. 5 the glass fibre 2 coming from an exchange is connected to an optoelectrical converter 82. The output of the optoelectrical converter is connected to four tuning units 84,86,88 and 90. The outputs of the tuning units 84,86,88 and 90 are connected to the inputs of the electro-optical converters 92,94,96 and 98 respectively. These converters comprise a splitter element for splitting the generated light into two equal portions. Each one of the two portions is fed to one of the two glass fibres 30 in the glass fibre cables 6 and 8 respectively (Fig. 1), so that identical signals are available on the two glass fibre cables 6 and 8.

The light signals coming from the two glass fibres 38 of the two different glass fibre cables 6 and 8 are combined in the optoelectrical converter, converted into an electric signal and subsequently decoded. The four outputs of the optoelectrical converter 100 are connected to control inputs of the tuning units 84,86,88 and 90.

The distribution unit as shown in Fig. 5 is a possible embodiment as this may exist when the network is initially used. The signal received through the glass fibre 2 is an amplitude-modulated light signal which comprises a plurality of audio channels as a result of frequency division multiplexing (FDM). At the output of the optoelectrical converter 82 an FDM signal is present which comprises a plurality of audio signals. The tuning units 84,86,88 and 90 may be tuned to one of the audio signals under the control of the optoelectrical converter 100. The selected audio signal is converted into optical signals by means of the respective electro-optical converters 92,94,96 and 98. These converters may comprise, for example, simple lasers such as the ones which are also used in CD players. The light generated by the electro-optical converters 92,94,96 and 98 is split up into two equal portions and applied to the associated glass fibres 30,32,34 and 36 in the two glass fibre cables 6 and 8.

Control signals coming from the audio receivers are coupled into the glass fibre 38 by means of the relevant coupling elements. The light coming from the glass fibres 38 of the two glass fibre cables 6 and 8 is combined and applied to the optoelectrical converter 100. In this converter also the received light signal is decoded and the appropriate tuning unit is tuned to the desired audio signal in response to the decoded control signal.

Since it is possible that different audio receivers simultaneously send a control signal to the distribution unit, measures are to be taken to avoid mutual disturbance by these control signals. This may be effected, for example, by means of wavelength multiplexing but by far the most simple solution is the application of a random access protocol such as ALOHA. Such random access protocols are described in the book entitled "Integrated Digital Communications Network" by G. Pujolle et al., pp. 146-152.

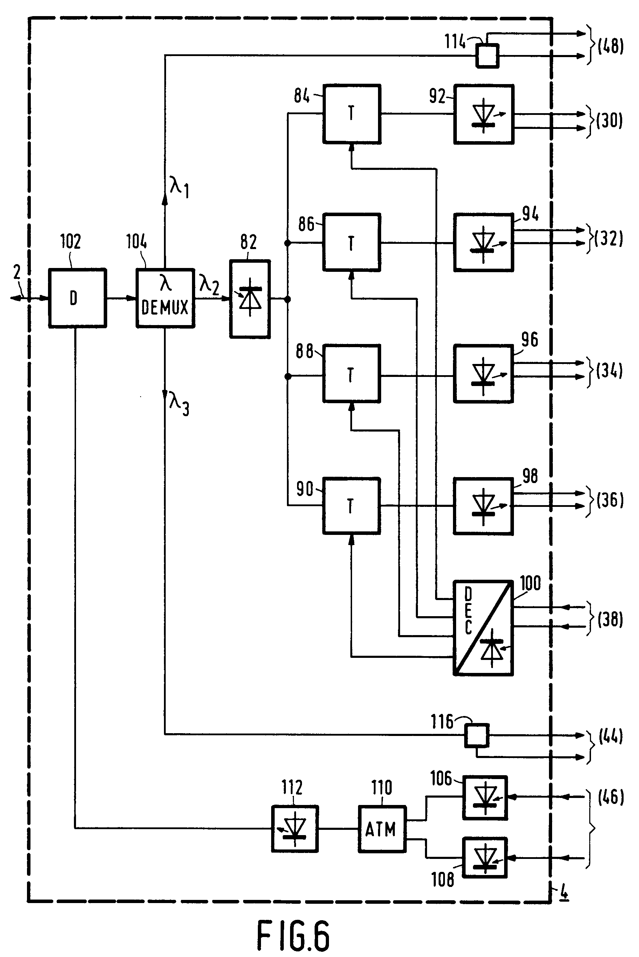

The distribution unit as shown in Fig. 6 is a possible embodiment of the distribution unit 4 as this may be formed after the network has been extended.

The elements already shown in Fig. 5 have like functions in the distribution unit shown in Fig. 6 and will not be explained any further here. The glass fibre 2 coming from the exchange is connected to the input of a duplexer 102. An output of the duplexer 102 is connected to an input of a wavelength demultiplexer 104. A first output of the wavelength demultiplexer 104 is connected to a splitter element 114. The two outputs of the splitter element 114 are connected each to a glass fibre 48 of the respective glass fibre cables 6 and 8.

A second output of the wavelength demultiplexer 104 is connected to the input of the optoelectrical converter 82 already described hereinbefore. A third output of the wavelength demultiplexer 104 is connected to a splitter element 116. The two outputs of the splitter element 116 are connected each to a glass fibre 44 of the respective glass fibre cables 6 and 8.

The glass fibres 46 of the glass fibre cables 6 and 8 are connected each to their own optoelectrical converter 106 and 108 respectively. The output of the optoelectrical converter 106 and the output of the optoelectrical converter 108 are connected to two inputs of an ATM multiplexer 110. The output of the ATM multiplexer 110 is connected to the input of an electro-optical converter 112. The output of the electro-optical converter 112 is connected to an input of the duplexer 102.

For simultaneously receiving information from the glass fibre 2 as well as sending information through the glass fibre 2, the duplexer 102 is provided. The wavelength demultiplexer splits up the output signal of the duplexer 102 into three components which are situated each in a different wavelength area.

The signal having wavelength λ₁ is intended for transmitting HDTV signals. These TV signals are modulated on optical carriers which are relatively close together (Δf = 10 GHz). The selection of the desired transmitter is then made in the TV set which to this end comprises an optical heterodyne receiver. Optical heterodyne receivers are known, for example, from "TBOSS - A transparent optical subscriber system with full duplex multiaccess provided by tunable coherent single laser transceivers", Proc. OFC., February 18-22, 1991, San Diego, p. 183, paper ThN3. The signal having wavelength λ₁ is split up into two portions by the splitter element 114, either portion being distributed by a monomode glass fibre from one of the glass fibre cables.

The optoelectrical converter 82 and the elements related thereto are used for audio distribution as has already been explained with respect to Fig. 5.

The signal having wavelength λ₃ is intended for transferring wideband ISDN signals, such as videophone signals. These signals are transmitted with the aid of the ATM (Asynchronous Transfer Mode). ATM is known, for example, from the journal article entitled "Asynchronous Transfer Mode" Electrical Communication, Vol. 64, No. 2/3 1990, pp. 117-123. The received light signal is split up into two portions by the splitter element 116, which portions are fed to the glass fibre 44 in the respective glass fibre cables 6 and 8. The terminal unit processes only the ATM packets carrying the right address in their headers, whereas the other packets intended for different terminal units are left as they are. As a result, the network according to the invention is extremely suitable for distributing ATM signals.

The ATM signals to be transmitted coming from the two glass fibre cables 6 and 8 are applied to two optoelectrical converters 106 and 108 through the glass fibres 46. The ATM multiplexer 110 provides that ATM packets that may have been received simultaneously from the glass fibres 46 are transmitted consecutively. For this purpose, the ATM multiplexer comprises a buffer memory for temporarily storing the packets received. The packets to be transmitted are converted by the electro-optical converter 112 into an optical signal which is fed to an input of the duplexer 102 to be transmitted through the glass fibre 2. For avoiding mutual disturbance between two wideband ISDN apparatus wishing to simultaneously place an ATM signal on the same glass fibre cable, a separate glass fibre from the relevant glass fibre cable may be used for each wideband ISDN apparatus.

For extending the simple network according to Fig. 5 into the advanced network according to Fig. 6, only the distribution unit needs to be modified and the new terminal units connected. In the rest of the network inclusive of the existing terminal units, nothing further needs to be changed.

## Claims

1. Telecommunication network comprising a glass fibre cable coupled to a distribution unit, this cable comprising at least a branch element which includes an output element for coupling out a fraction of the light transported through the glass fibre cable, the output element being coupled to an output of the branch element, the output of the branch element being coupled to a network terminal, characterized in that the glass fibre cable comprises more than one glass fibre, in that the branch element comprises a plurality of output elements for coupling out fractions of the light transported through different glass fibres, in that the output elements are coupled to outputs of the branch element and in that the outputs of the branch element are coupled to the network terminal.

2. Telecommunication network as claimed in Claim 1, characterized in that the glass fibre cable comprises at least two types of glass fibres.

3. Telecommunication network as claimed in Claim 2, characterized in that the glass fibre cable comprises at least a multimode and a single mode fibre.

4. Telecommunication network as claimed in Claim 1, 2 or 3, characterized in that the glass fibre cable comprises a glass fibre ribbon.

5. Coupling element suitable for use in a telecommunication network as claimed in Claim 4, characterized in that the branch element comprises a substrate which on one side has a first series of recesses intersecting a second series of recesses, in that the output elements comprise light scattering elements at the intersections of a recess from the first series of recesses and an associated recess from the second series of recesses, each recess from the second series of recesses accommodating a maximum of one output element.

6. Telecommunication network as claimed in Claims 3 and 4, characterized in that the glass fibre cable comprises a single mode glass fibre ribbon and a multimode glass fibre ribbon.

7. Glass fibre cable suitable for use in a telecommunication network as claimed in Claim 2,3,4 or 6.

8. Telecommunication network as claimed in one of the Claims 1, 2, 3, 4 or 6, characterized in that the telecommunication network comprises a star network of glass fibre cables which include branch elements.
